**Europäisches Patentamt**

**European Patent Office**

**Office européen des brevets**

(19)

(11) Publication number : **0 532 277 A2**

# (12) EUROPEAN PATENT APPLICATION

(21) Application number : **92308154.1**

(22) Date of filing : **09.09.92**

(51) Int. Cl.⁵ : **G11B 27/28**

(30) Priority : **09.09.91 JP 257050/91**

(43) Date of publication of application :
**17.03.93 Bulletin 93/11**

(84) Designated Contracting States :
**DE FR GB NL**

(71) Applicant : **PIONEER ELECTRONIC
CORPORATION
No. 4-1, Meguro 1-chome
Meguro-ku Tokyo-to (JP)**

(72) Inventor : **Ooishi, Masami, c/o Pioneer
Electronic Corp.
Tokorozawa Works, No. 2610 Hanazono
4-chome
Tokorozawa-shi, Saitama-ken (JP)**
Inventor : **Iga, Masahito, c/o Pioneer
Electronic Corp.
Tokorozawa Works, No. 2610 Hanazono
4-chome
Tokorozawa-shi, Saitama-ken (JP)**
Inventor : **Sawabe, Takao, c/o Pioneer
Electronic Corp.
Tokorozawa Works, No. 2610 Hanazono
4-chome
Tokorozawa-shi, Saitama-ken (JP)**

(74) Representative : **Brunner, Michael John et al
GILL JENNINGS & EVERY, Broadgate House,
7 Eldon Street
London EC2M 7LH (GB)**

(54) **Method of recording information on video disk.**

(57)    A code signal (DSCD) for controlling the playback of the video disk is added to each video frame of a video signal in a predetermined period thereof, and the video signal, which includes the added code signal, is recorded on a video disk. The code signal includes a video frame number code (UFN) representative of successive values from a lead-in area through a program area to a lead-out area of the video disk, and may additionally includes identification information (ADST) for identifying each of the lead-in, program, and lead-out areas to which the video frame number code belongs. Typically, the video signal is a MUSE signal. The predetermined period is an undefined horizontal scanning line period.

F I G. 1

EP 0 532 277 A2

## BACKGROUND OF THE INVENTION

Field of the Invention:

The present invention relates to a method of recording information on a video disk such as a laser video disk, and more particularly to a method of recording a MUSE (multiple-sub-Nyquist-sampling encoding) signal on a video disk.

Description of the Prior Art:

Recent years have seen the development of high-definition television for giving television viewers picture images of higher resolution than conventional television systems. The high-definition television can display picture images with fine detail as the picture images transmitted by high-definition television system that has been proposed and is now available in Japan having a large aspect ratio of 16/9 and 1125 scanning lines. The high-definition television has widely different standards for signal transmission than those of the conventional television systems such as the NTSC system.

High-definition television video signals are transmitted to high-definition television receivers via a broadcasting satellite (BS). The bandwidth required to transmit high-definition television video signals is at least five times greater than that required to transmit the conventional television video signals. Because of the wide bandwidth required, it is impossible to transmit high-definition television video signals in one channel of the BS transmitter unless they are compressed in bandwidth.

One process of compressing the bandwidth of high-definition television video signals so that they can be transmitted in one channel of BS has been developed in Japan. The developed process is known as the MUSE system. For details of the MUSE system, see, for example, "*Development of the MUSE System*", NHK Technical Research, Vol. 39, No. 2, Ser. No. 172, 1987, and "*Satellite Transmission for High-definition Television - MUSE -*", Television Society Journal, Vol. 42, No. 5, 1988. According to the MUSE system, high-definition television video signals are sub-Nyquist-sampled for compression into a transmission bandwidth of 8.1 MHz for analog transmission. The compressed video signals are called "MUSE signals".

The high-definition television system and the MUSE system, which have been outlined above, can be employed to record video signals on and reproduce video signals from video disks such as laser video disks, as with the conventional NTSC system. Specifically, analog MUSE signals are recorded on and reproduced from video disks according to the high-definition television system and the MUSE system.

According to the MUSE system, the transmission signal format for MUSE signals contains an undefined horizontal scanning line which is denoted as a line No. 564. The horizontal scanning line No. 564 is used to transmit a program transmission control signal or the like from broadcasting stations. However, such a program transmission control signal is not required in non-broadcasting applications. Therefore, the horizontal scanning line No. 564 is an "empty line" and available for other use in the recording of video disk signals.

In an application for recording MUSE signals on video disks, video disk playback control data (hereinafter referred to as a "disk code (DSCD)") including data for controlling video disk players and address data for information recorded on video disks may be additionally recorded at the empty line No. 564 for better controlling and functioning of the video disk players.

At present, no unified or specific standards have not been established for the disk code (DSCD) which may be recorded on video disks at the scanning line No. 564.

## SUMMARY OF THE INVENTION

It is an object of the present invention to provide a method of recording a MUSE signal on a video disk, while effectively utilizing an empty scanning line No. 564, with a relatively simple disk code recording device, for better controlling of a video disk playback device.

According to the present invention, there is provided a method of recording, on a video disk, information including a code signal for controlling the playback of the video disk, including the steps of adding a code signal to each video frame of a video signal in a predetermined period thereof, and recording the video signal, which includes the added code signal, on a video disk, the code signal including a video frame number code representative of successive values from a lead-in area through a program area to a lead-out area of the video disk.

More specifically, a disk code DSCD for controlling the playback of the video disk is inserted into an undefined horizontal scanning line, i.e., a line No. 564, of each frame of a MUSE signal, and the MUSE signal with the disk code DSCD added thereto is recorded on a video disk. The disk code DSCD includes a video frame number code UFN which has a succession of values from the lead-in area through the program area to

2

the lead-out area of the video disk.

The disk code DSCD further includes identification data ADST for identifying each of the recording areas to which the video frame number code UFN belongs.

Therefore, the video frame number code UFN, which is indicative of video frame numbers, i.e., video frame addresses, are recorded in recording tracks corresponding to the undefined horizontal scanning lines of the respective video frames of the video disk. As a result, when the disk code DSCD is to be added to the video disk, the video frame number code UFN can be generated simply by the counting-up operation of a counter, and hence a disk code generator for generating the disk code DSCD may be of a simple arrangement.

When the video disk is played back, the movement and position of an optical pickup for reading the recorded information can easily be controlled in a search mode or the like because of successive numbers of values of the video frame number code UFN.

Furthermore, since the disk code DSCD additionally includes the identification data ADST, when the disk code DSCD is read, it is possible to read both the video frame addresses and the recording areas to which the video frames belong. Consequently, in an initial search stage to search for a video frame address "0" in the program area when the video disk starts to be played back, for example, the present pickup position can easily be determined and corrected even if the optical pickup overshoots into the lead-in area. Similarly, the pickup position can also easily be controlled when the optical pickup is to be moved to search for a last video frame in the program area. The position of the optical pickup can thus be controlled with ease upon movement of the pickup across the boundaries between the recording areas of video disk.

The above and other objects, features, and advantages of the present invention will become apparent from the following description when taken in conjunction with the accompanying drawings which illustrate a preferred embodiment of the present invention by way of example.

BRIEF DESCRIPTION OF THE DRAWINGS

FIG. 1 is a block diagram of a MUSE signal recording system;
FIG. 2 is a block diagram of a MUSE signal reproducing system;
FIG. 3 is a diagram of a transmission signal format for MUSE signals;
FIG. 4 is a diagram showing a signal waveform of MUSE signals;
FIG. 5 is a diagram showing a signal waveform of an HD signal;
FIG. 6 is a diagram showing a signal waveform of a frame pulse (FP) line;
FIG. 7 is a diagram showing a signal waveform of a disk code (DSCD);
FIG. 8 is a diagram showing the manner in which a MUSE signal is sampled for transmission;
FIG. 9 is a diagram showing a data format for the disk code (DSCD);
FIG. 10 is a diagram of a data format for a header (SYNC);
FIG. 11 is a diagram of a data format for a control mode identification code (MODE);
FIG. 12 is a diagram of a data format for a chapter address code (CADR);
FIG. 13 is a diagram of a data format for a frame address first code (FADR1);
FIG. 14 is a diagram of a data format for a universal frame number code (UFN);
FIG. 15 is a diagram of a data format for a frame address second code (FADR2);
FIG. 16 is a diagram of a data format for a still mode identification code (SPC);
FIG. 17 is a diagram illustrative of positions for recording TOC data blocks (TBLK);
FIG. 18 is a diagram of a recording format for TOC data blocks (TBLK);
FIG. 19 is a diagram of a data format for a TOC data (TD):
FIG. 20 is a diagram of a data format for a header (SYNC);
FIG. 21 is a diagram of a data format for a TOC-contained information code (TMODE);
FIG. 22 is a diagram of a data format for a chapter information code (CIMFO) and a frame information code (FIMFO);
FIG. 23 is a diagram of a data format for an extended data code (EDATA);
FIG. 24 is a block diagram of a disk code reader; and
FIG. 25 is a diagram illustrative of a level setting process based on gray level data (GLV).

DETAILED DESCRIPTION OF THE PREFERRED EMBODIMENT

[I] *MUSE signal recording system*:

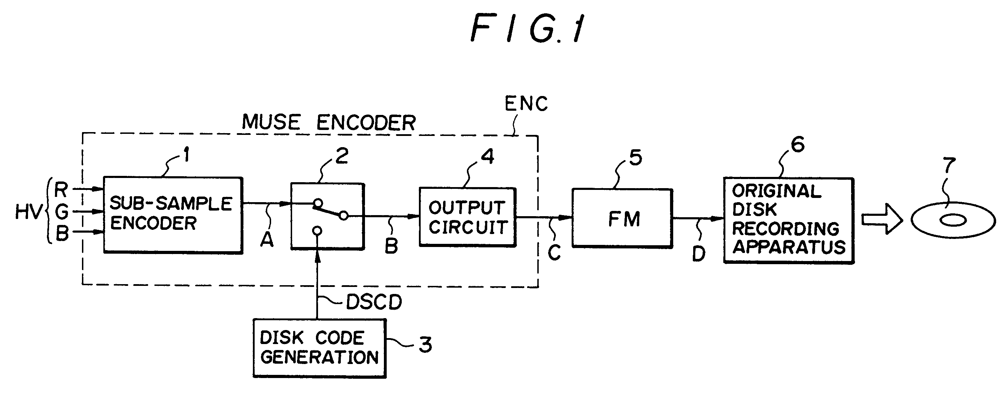

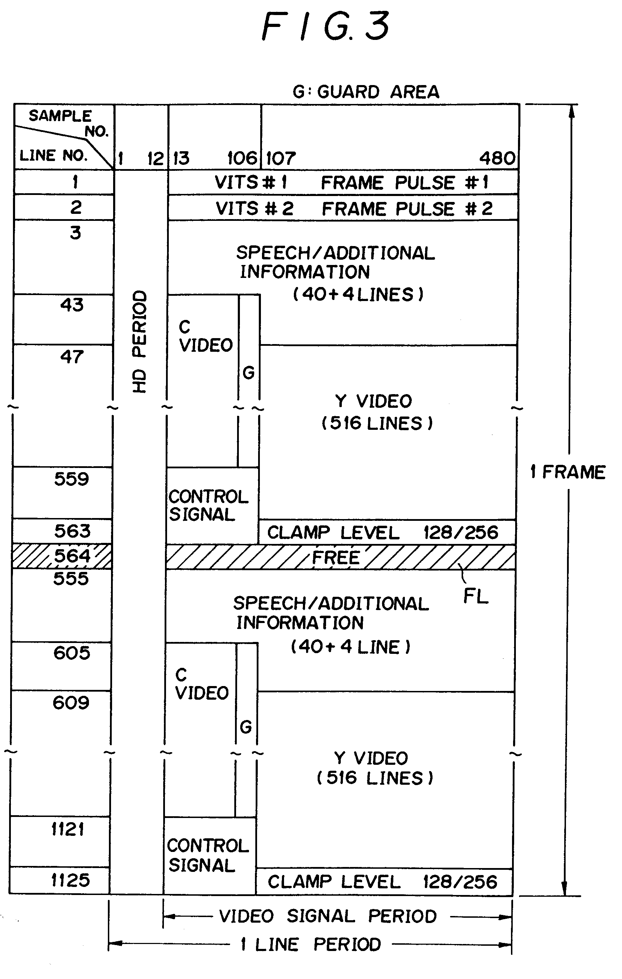

FIG. 1 schematically shows, in block form, a MUSE signal recording system, i.e., a MUSE video signal recording system, to which the present invention is applied. As shown in FIG. 1, a high-definition television video signal HV to be recorded on a video disk such as a laser video disk is supplied to a MUSE encoder ENC. The MUSE encoder ENC includes a sub-sampling encoder 1 for converting the supplied high-definition television video signal HV into a digital video signal, and sub-Nyquist sampling the digital video signal into a digital MUSE signal A, a disk code adder 2 for inserting a disk code DSCD into an empty line or undefined horizontal scanning line No. 564 (see FIG. 3) of each video frame of the digital MUSE signal A from the sub-sampling encoder 1, thereby to produce a multiplex MUSE signal B, a disk code generator 3 for generating and supplying a disk code DSCD to the disk code adder 2, and an output circuit 4 for filtering the multiplex MUSE signal B from the disk code adder 2 and thereafter converting the filtered MUSE signal B into an analog MUSE signal C.

The analog MUSE signal C is then supplied from the MUSE encoder ENC to a frequency modulator 5 which frequency-modulates the analog MUSE signal C into an FM signal D. The FM signal D from the frequency modulator 5 is then sent to a original disk recording apparatus 6 in which the FM signal D is recorded as signal pits on a master disk 7 that is coated with a photoresist layer. Therefore, the master disk 7 stores the frequency-modulated analog MUSE signal with the disk code DSCD inserted at an empty horizontal scanning line FL (see FIG. 3) of each video frame in the recorded analog MUSE signal. From the master disk 7, there can be manufactured a large number of video disks 7A (one shown in FIG. 3) according to a known fabrication process. Such a fabrication process will not be described below as it has no direct bearing on the present invention.

[II] *MUSE signal reproducing system*:

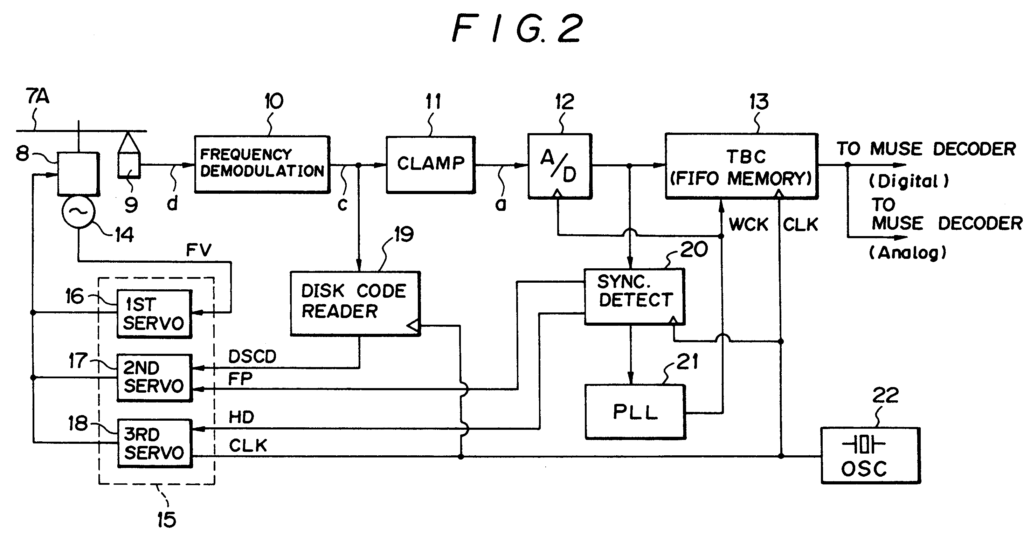

FIG. 2 schematically shows, in block form, a MUSE signal reproducing system such as a MUSE optical video disk player including a spindle motor controller and a read signal processor. The MUSE signal reproducing system will be described below because the present invention offers advantages in reading the disk code DSCD from the video disk 7A and controlling the video disk player based on the disk code DSCD.

While the MUSE signal reproducing system is in operation, the video disk 7A is rotated about its central axis by a spindle motor 8. For properly decoding the MUSE signal in a MUSE decoder, it is necessary to control the rotational speed of the spindle motor 8 so that a horizontal synchronizing signal HD of the MUSE signal recorded on the video disk 7A will be at predetermined time intervals. After the spindle motor 8 has started to be energized, the rotational speed thereof increases with time up to a predetermined rotational speed. A spindle motor servo control circuit 15 includes a first servo control circuit 16, a second servo control circuit 17, and a third servo control circuit 18 for effecting rough and fine speed adjustment depending on the rotational speed of the spindle motor 8 to bring the spindle motor speed into synchronism with the horizontal synchronizing signal HD.

The first servo control circuit 16 effects rough adjustment on the rotational speed of the spindle motor 8 immediately after the spindle motor 8 is energized. The first servo control circuit 16 compares the frequency of a speed signal FV produced by a rotational speed detector 14 coupled to the spindle motor 8 with the frequency of reference pulses generated by a built-in reference pulse generator of the first servo control circuit 16, and controls the rotational speed of the spindle motor 8 with the accuracy that is determined by the rotational speed detector 14.

As the video disk 7A is rotated by the spindle motor 8, an optical pickup 9 optically reads the recorded information in the form of signal pits from the video disk 7A, and converts the optical information thus read into a reproduced RF signal d which is sent to a frequency demodulator 10. The frequency demodulator 10 demodulates the supplied RF signal d, which has been frequency-modulated, into a MUSE signal c. The demodulated MUSE signal c is applied to a clamper 11 and a disk code reader 19. The demodulated MUSE signal c is processed by the clamper 11, an A/D converter 12, and a time base corrector (TBC) 13, and the processed MUSE signal is supplied either as a digital signal to a MUSE decoder or as an analog signal, after converted by a D/A converter, to the MUSE decoder. Immediately after the spindle motor 8 is energized, the rotational speed of the spindle motor 8 has not yet accurately been controlled into a predetermined speed, and hence no proper MUSE signal is not supplied to the MUSE decoder.

The disk code DSCD inserted at the empty line No. 564 contained in the demodulated MUSE signal c can be read at the spindle motor speed that is controlled by the first servo control circuit 16. Since the demodulated MUSE signal c is also supplied to the disk code reader 19, the disk code reader 19 reads the disk code DSCD, which is then used as a signal to control the rotational speed of the spindle motor 8 with the second servo control circuit 17.

The second servo control circuit 17 is supplied with the disk code DSCD and frame pulses FP that are produced by a synchronous detector 20 to which the MUSE signal from the A/D converter 12 is supplied. The second servo control circuit 17 controls the spindle motor 8 based on the disk code DSCD and the frame pulses FP so that the disk code DSCD and the frame pulses FP will be reproduced respectively at reference times.

More specifically, when the rotational speed of the spindle motor 8 reaches a reference value in the first servo control circuit 16 under the control of the first servo control circuit 16, the rough adjustment effected by the first servo control circuit 16 switches to fine adjustment effected by the second servo control circuit 17. In the fine adjustment, frame pulses contained in the MUSE signal can be detected by the synchronous detector 20, and are supplied from the synchronous detector 20 to the second servo control circuit 17. The frame pulses FP and the disk code DSCD are assigned to each frame of the MUSE signal. In the fine adjustment, the rotational speed of the spindle motor 8 is controlled more accurately based on the frame pulses FP and the disk code DSCD that are detected, than in the rough adjustment. The control by the second servo control circuit 17 of the rotational speed of the spindle motor 8 is carried out not only after the start of the spindle motor 8 but also when the rotational speed of the spindle motor 8 is temporarily forced out of a predetermined speed in various search modes such as a picture search mode. Therefore, the disk code DSCD is also effective to detect the time base of the reproduced MUSE signal.

When the rotational speed of the spindle motor 8 reaches such a level that it can be controlled highly accurately in synchronism with the frame pulses FP and the disk code DSCD by the second servo control circuit 17, the synchronous detector 20 is now able to detect the horizontal synchronizing signal HD from the reproduced MUSE signal. The detected horizontal synchronizing signal HD is supplied from the synchronous detector 20 to the third servo control circuit 18. At this time, the second servo control circuit 17 is taken over by the third servo control circuit 18 for servo control of the rotational speed of the spindle motor 8. Thereafter, the rotational speed of the spindle motor 8 is controlled to a nicety based on the horizontal synchronizing signal HD by the third servo control circuit 18.

At the time a servo control loop is established by the third servo control circuit 18, the reproduced RF signal d from the optical pickup 9 is frequency-demodulated by the frequency demodulator 10, and the demodulated MUSE signal c is supplied to the clamper 11, as described above. The clamper 11 clamps the MUSE signal during the period of the horizontal synchronizing signal HD to a clamp level (128/256 level), thus reproducing a DC component thereof. The MUSE signal a produced by the clamper 11 is converted by the A/D converter 12 into a digital MUSE signal which is thereafter supplied to the TBC 13. The TBC 13 has a FIFO memory for correcting time base variations, i.e., jitter, of the reproduced MUSE signal which have been caused by the eccentricity of the video disk 7A or the like.

The synchronous detector 20 is also connected to a phase-locked loop 21 which in turn is coupled to the A/D converter 12 and the TBC 13. The TBC 13, the third servo control circuit 18, and the synchronous detector 20 are supplied with clock pulses from a crystal oscillator 22.

For further details of the spindle motor controller and the read signal processor of the MUSE signal reproducing system shown in FIG. 2, reference should be made to the article *"Development of MUSE optical video disk system (2) Player"* (1990 Annual Convention of Television Society (ITEC'90), 9-7) or Japanese patent application No. 01-180811, for example.

[III] *Transmission signal format for MUSE signals*:

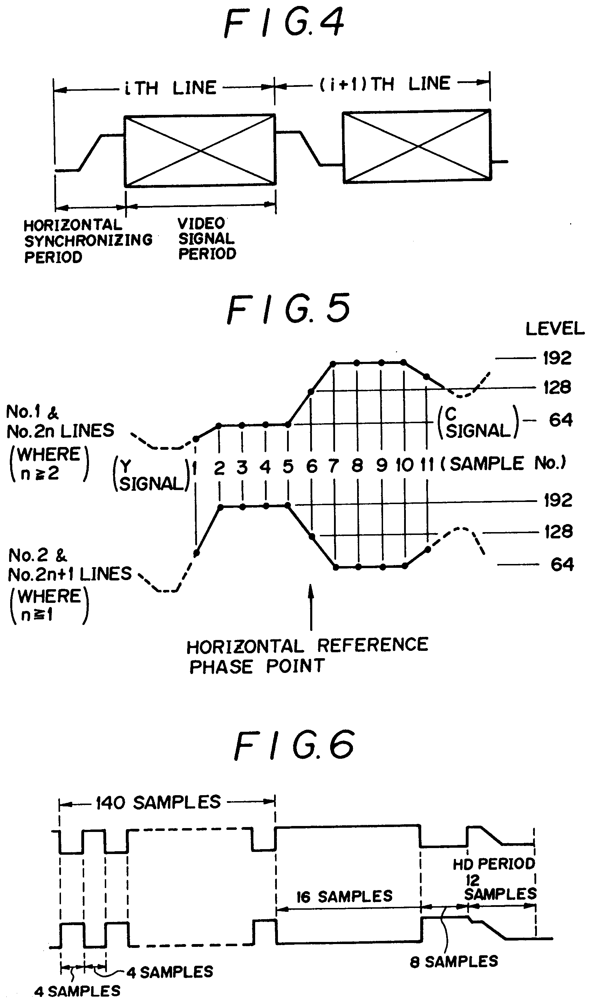

For a better understanding of the present invention, FIG. 3 shows a transmission signal format for MUSE signals, FIG. 4 a signal waveform of MUSE signals, FIG. 5 a signal waveform of an HD signal, and FIG. 6 a signal waveform of a frame pulse (FP) line. These signal formats and signal waveforms are regulated in "*Standard transmission system with respect to high-definition television broadcasts*" (Article 8, paragraph 2, figure No. 2), Ordinance No. 16 of the Ministry of Posts and Telecommunications of Japan. Only those portions of the signal formats and signal waveforms which are relevant to the present invention will be described below.

As shown in FIG. 3, one frame of the MUSE signal is composed of two fields and has a total of 1125 horizontal scanning lines. Each of the horizontal scanning lines includes a combination of a horizontal synchronizing signal HD and a video signal following the horizontal synchronizing signal HD. As described above, the horizontal scanning line No. 564 is reserved for the transmission of a program transmission control signal or the like from broadcasting stations, and is undefined for use with video disks. According to the present invention, the disk code DSCD is additionally recorded at the horizontal scanning line No. 564 as the empty (free) line FL.

As illustrated in FIG. 4, the horizontal synchronizing signal HD of the MUSE signal is added in the same level range as the video signal, and has an amplitude which is about 1/2 of the peak-to-peak value of the video signal. The signal waveform of the horizontal synchronizing signal HD in the $(i + 1)$th line is a reversal of the signal waveform of the horizontal synchronizing signal HD in the $i$th line.

FIG. 5 shows the signal waveform of the horizontal synchronizing signal HD. The signal waveform of the horizontal synchronizing signal HD is reset (the horizontal synchronizing signal HD in the line No. 3 has a positive-going edge) when the line changes to the next line and the transmission of the frame pulses is finished.

With respect to the levels of the sample Nos. 1 through 11 of the horizontal synchronizing signal HD, the level of the sample No. 1 is an arithmetic mean of the level of the horizontal synchronizing signal immediately prior to the sample No. 1 and the level of sample No. 2, and the level of the sample No. 11 is an arithmetic mean of the level of the horizontal synchronizing signal immediately after the sample No. 11 and the level of sample No. 10. One horizontal scanning period of the MUSE signal is composed of 480 samples. The numerals shown as "SAMPLE NO." in FIG. 5 indicate the respective numbers of the samples as counted from the first sample in one horizontal scanning period. The time of the sample No. 6 is a horizontal reference phase point, which is used to control the phase of a clock signal that is generated for resampling the MUSE signal in the MUSE decoder. The numerals shown under "LEVEL" in FIG. 5 represent the levels of the respective samples when the MUSE signal is quantized into 256 levels. The horizontal synchronizing signal HD at the horizontal reference phase point has the level 128, which is of a central value of the image signal amplitude.

The MUSE signal also contains, together with the horizontal synchronizing signal HD, frame pulses FP (shown in FIG. 6) inserted as frame synchronizing signals in the first and second horizontal scanning lines, respectively. The reversal of the signal waveform of the horizontal synchronizing signal HD is reset by the frame pulses FP.

[IV] *Multiplexing of disk code DSCD*:

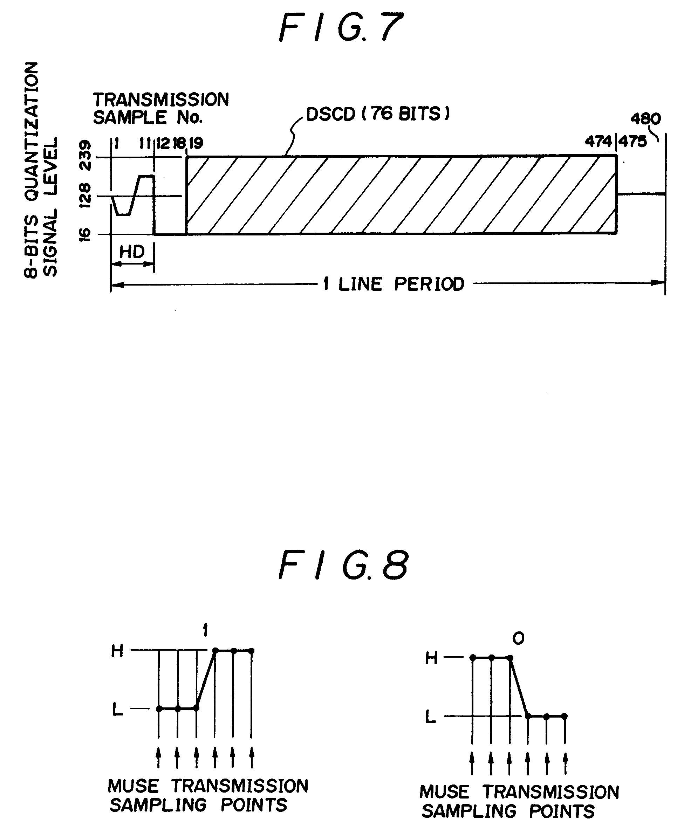

FIG. 7 shows the signal waveform of the disk code DSCD. As shown in FIG. 1, the disk code DSCD is generated by the disk code generator 3, and multiplexed into the digital MUSE signal A from the sub-sampling encoder 1 by the disk code adder 2. The period in which the disk code DSCD is multiplexed, i.e., the period in which it is added to the digital MUSE signal A, is the period of the empty line FL, i.e., the horizontal scanning line No. 564, of each frame. In a lead-in area of the video disk 7A, signals may be added to other lines than the horizontal scanning line No. 564 because no video information is recorded in the lead-in area. In an example given below, TOC (Table of Contents) data is also added to other lines than the horizontal scanning line No. 564.

Multiplexing periods:

(1) MUSE signal line No. 564, from sample Nos. 19 to 474;

(2) In the lead-in area, all 128 lines including MUSE signal line No. 48 + 8n and No. 610 + 8n (n = 0 ~ 63), from sample Nos. 19 ~ 474.

Data transmission rate:

2.7 Mbits/s, 76 bits/video line, one bit transmitted per 6 transmitted samples of the MUSE signal (see FIG. 8).

[V] *Data format for disk code DSCD*:

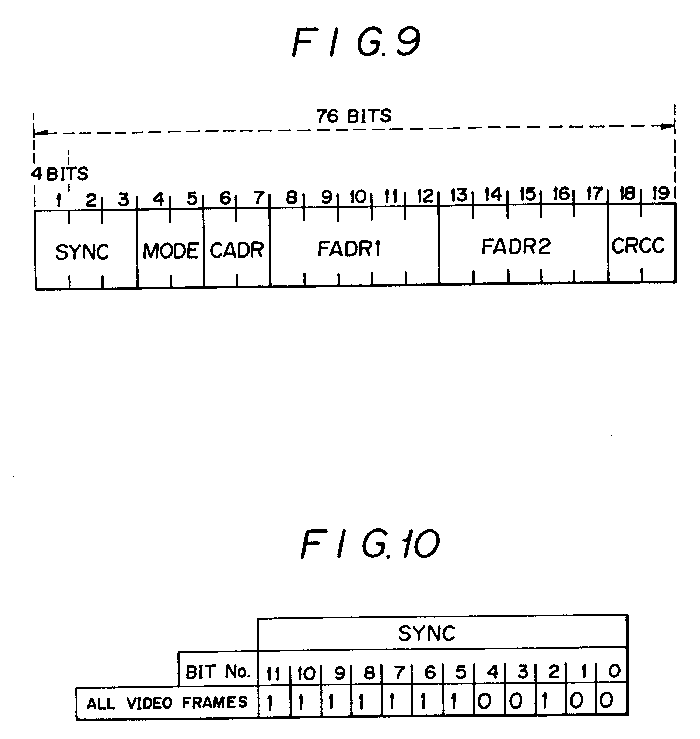

FIG. 9 shows a data format for the disk code DSCD. The disk code DSCD is inserted as 76-bit data in the horizontal scanning line No. 564 at the sample Nos. 19 ~ 474, as shown in FIG. 7. As shown in FIG. 9, the disk code DSCD includes, successively in order from the sample No. 19 to the sample No. 474, (1) a header SYNC, (2) a control mode identification code MODE, (3) a chapter address code CADR, (4) a frame address first code FADR1, (5) a frame address second code FADR2, and (6) an error correcting code CRCC. These codes will be described in detail below.

(1) Header SYNC (FIG. 10):

The header SYNC is a code for identifying the disk code DSCD. More specifically, the header SYNC is a code for identifying control and address signals for the readout position of the optical pickup 9 of the video disk player. A data format for the header SYNC is shown by way of example in FIG. 10. The header SYNC is of the same contents with respect to the empty line (undefined horizontal scanning line) FL, i.e., the line No. 564, in each of the video frames in the lead-in, program, and lead-out areas of the video disk 7A, and other lines in the lead-in area than the line No. 564 where the disk code DSCD is added.

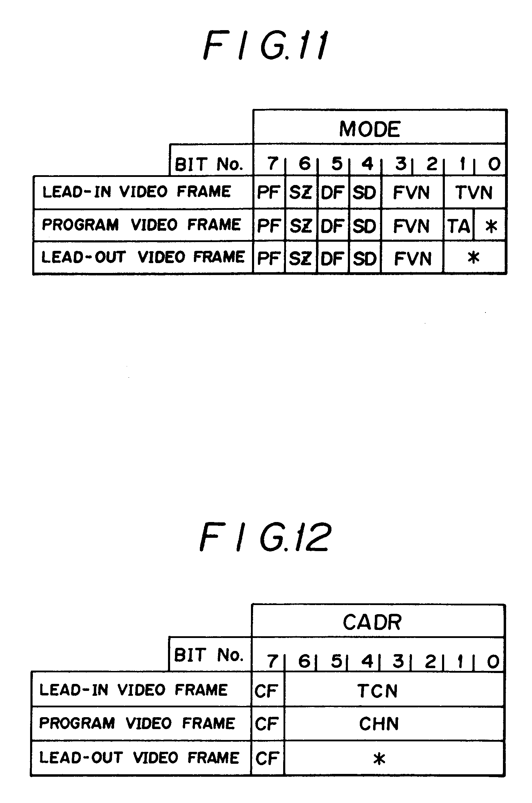

(2) Control mode identification code MODE (FIG. 11):

The control mode identification code MODE contains information with respect to the type of a video disk in which the disk code DSCD is recorded, i.e., a video disk which is going to be played back at present, and attributes of the video disk such as a disk side to be played back, and information with respect to a recording region on the video disk for the disk code DSCD. As shown in FIG. 11, the contents of the disk code DSCD differ depending on the recording region and hence the video frame corresponding to the recording region. The names and meanings of bits in the control mode identification code MODE will be set forth below.

PF: Multiplexing period identification bit:

PF = "0" indicating that the data multiplexing period is within the horizontal scanning line No. 564. PF = "1" if the multiplexed data is TOC data recorded in the lead-in video frame.

SZ: Disk dimension identification bit:

SZ = "0" if the video disk is 30 cm in diameter, and SZ = "1" if the video disk is 20 cm in diameter.

DF: Disk format identification bit:

DF = "0" if the video disk is a CAV (constant-angular-velocity) video disk, and DF = "1" if the video disk is a CLV (constant-linear-velocity) video disk.

SD: Disk side identification bit:

SD = "0" if the disk side is a side 1, and SD = "1" if the disk side is a side 2.

FVN: Control and address signal data format identification code:

The format is a true format if FVN = "00".

Otherwise, it is undefined.

TVN: TOC format identification code:

The format is a true format if TVN = "00".

Otherwise, it is undefined.

* : Undefined.

TA: TOC presence/absence identification bit:

If TA = "0", there is no recorded TOC data.

If TA = "1", there is recorded TOC data.

The reason why the TOC presence/absence identification bit TA is provided in the disk code DSCD in the program video frame is as follows: Since the video disk player is first started in a program area of the video disk, it is confirmed whether there is TOC data or not on the video disk. If TA = 1, then the optical pickup is moved into the lead-in area to confirm the TOC format identification code TVN in the disk code DSCD that is recorded in the empty line FL, i.e., the line No. 564, in the lead-in area, and the position of the optical pickup is controlled to read the TOC data.

(3) Chapter address code CADR (FIG. 12):

The chapter address code CADR is a code indicative of the arrangement of chapters in the video disk on which the disk code DSCD is recorded. As shown in FIG. 12, the contents of the chapter address code CADR differ depending on the recording region. The names and meanings of bits in the chapter address code CADR will be set forth below.

CF: Chapter number code identification bit:

CF = "0" if the chapter numbers on the opposite disk sides are independent of each other. CF = "1" if the chapter numbers are consecutive from the side 1 to the side 2.

TCN: Side-contained total chapter number code:

If CF = "0", the maximum number of chapters on both sides 1, 2 is 124 (LCN = "111 1100").

If CF = "1", the maximum number of chapters on the side 2 is 124.

CHN: Chapter number code:

It is of a binary format with an MSB at first.

The starting chapter number is 0 or 1, or the number following the final chapter number on the other disk side containing the same program.

Successive values within program tracks.

The maximum chapter number is 124 (CHN = "111 1100").

CHN is invalid if TCN = "000 0000".

* : Undefined.

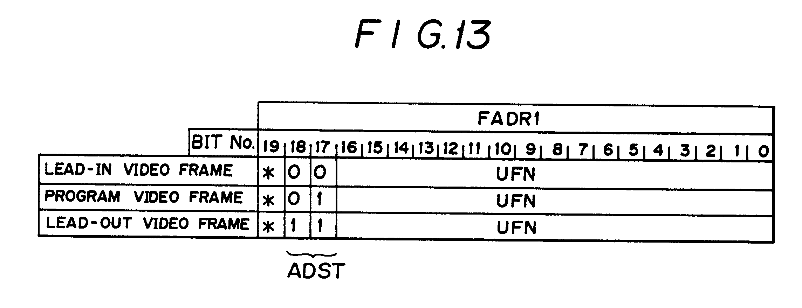

(4) Frame address first code FADR1 (FIG. 13):

The frame address first code FADR1 contains a universal frame number code UFN representative of successive frame numbers in each of the entire recording areas of the video disk 7A, which include the lead-in area, the program area, and the lead-out area. The frame address first code FADR1 also contains an area identification code ADST combined with the universal frame number code UFN and indicative of which area the universal frame number code UFN belongs to. As shown in FIG. 13, the universal frame number code UFN is assigned to 0 ~ 16 bits, and the area identification code ADST to 17 and 18 bits.

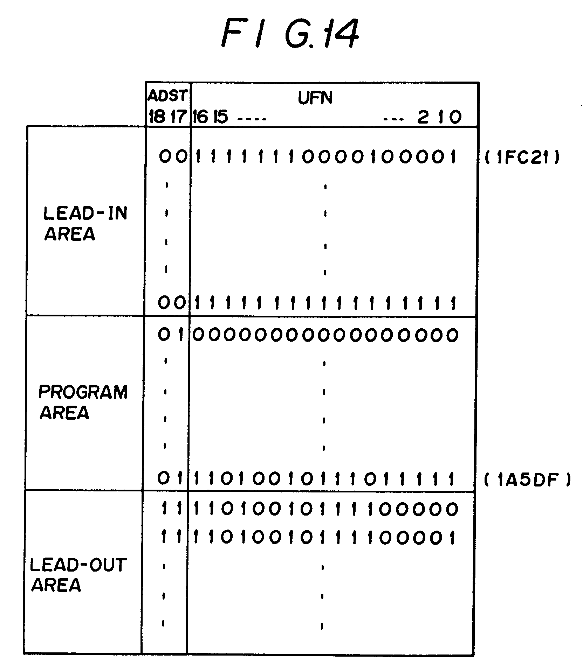

FIG. 14 shows the universal frame number code UFN in specific detail. In FIG. 14, if it is assumed that the lead-in area is about 33 seconds long, then the lead-in area has a lead-in start address of "1FC21" and a lead-in last address of "1FFFF" by way of hexadecimal notation. If it is assumed that the program area is one hour long, then the program area has a program start address of "00000" and a program last address of "1A5DF" by way of hexadecimal notation, and contains "0 to 107999" frames by way of decimal notation.

As described above, the universal frame number code UFN is of successive numbers or values ranging from the lead-in area through the program area to the lead-out area. Therefore, when the disk code DSCD is to be added to the video disk 7A, the universal frame number code UFN can be generated simply by the counting-up operation of a counter, and hence the disk code generator 3 (see FIG. 1) may be of a simple arrangement.

When the video disk 7A is played back, the movement and position of the optical pickup 9 (FIG. 2) can easily be controlled in a search mode or the like because of successive numbers of values of the universal frame number code UFN.

Since the area identification code ADST is recorded together with the universal frame number code UFN, when the disk code DSCD is read from the video disk 7A, it is possible to simultaneously read the address of a video frame and the recording area which the video frame belongs to. Consequently, in an initial search stage to search for a video frame address "0" in the program area when the video disk 7A starts to be played back, for example, the present pickup position can easily be determined and corrected even if the optical pickup 9 overshoots into the lead-in area. Similarly, the pickup position can also easily be controlled when the optical pickup 9 is to be moved to search for a last video frame in the program area. The position of the optical pickup 9 can thus be controlled with ease upon movement of the pickup across the boundaries between the recording areas of video disk 7A.

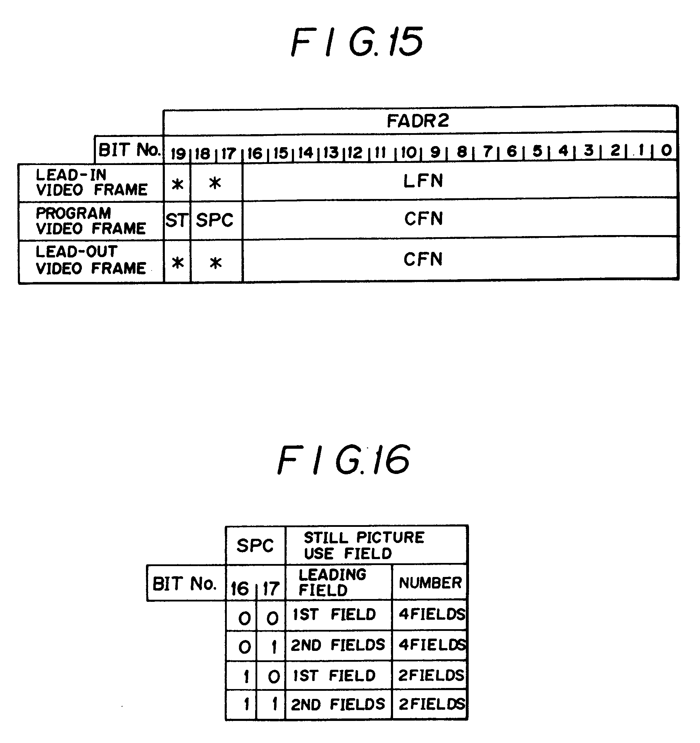

(5) Frame address second code FADR2 (FIG. 15):

The frame address second code FADR2 is a code mainly indicating information relative to the video frames. The frame address second code FADR2 is shown in FIG. 15, and includes codes whose names and meanings are described below.

ST: Picture stop bit:

When ST = "1", it automatically switches to a still image reproducing mode according to the contents of a still mode identification code (SPC).

SPC: Still mode identification code:

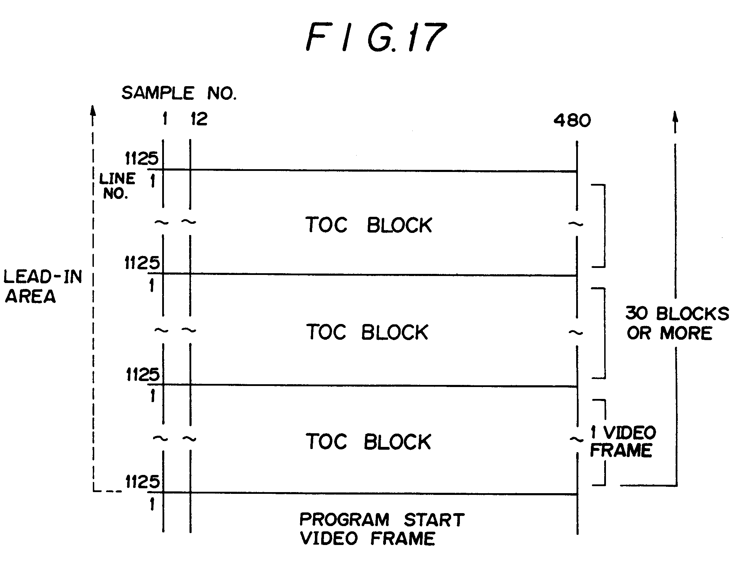

A data format for the still mode identification mode is shown in FIG. 16.

LFN: Universal frame number code of a program area last frame:

It is of a binary format with an MSB at first.

CFN: Frame number code in each chapter and the lead-out area:

It is of a binary format with an MSB at first.

It is of successive values in the video frames in each chapter and in the video frames in the lead-out area.

In a start video frame in each chapter and the lead-out frame, CFN = "0 0000 0000 0000 0000".

* : Undefined.

In the above format for the disk code DSCD, the side-contained total chapter number code TCN (see FIG. 12) is placed in the chapter address code CADR of the lead-in video frames, and the universal frame number code LFN of the program last video frame is placed in the frame address second code FADR2 of the lead-in video frames.

As described above, inasmuch as the universal frame number code LFN of the program last video frame is placed in the empty line FL, i.e., the horizontal scanning line No. 564, in the lead-in area, the length of the information recorded on the video disk 7A can be detected simply by reading the information contained in the empty line FL, i.e., the horizontal scanning line No. 564, without reading the TOC data. This allows a video disk player, which is designed to read only the information contained in the empty line FL, but not the TOC data, to detect the length of the information recorded on the video disk 7A. Consequently, the distance over which the optical pickup 9 has to be traversed in a search mode or the like can be predicted beforehand with ease, resulting in an improvement in the controllability of the video disk player.

The side-contained total chapter number code TCN is also recorded in the same empty line FL in the lead-in area. Therefore, if a control input command such as for designating a chapter that is not actually present on the video disk 7A is applied while the video disk player is in a special playback mode such as a chapter search mode, then it can easily be determined that such a control input command is erroneous, without having to read the TOC data. Since the optical pickup 9 does not need to be moved when it is determined that an applied control input command is erroneous, the controllability of the video disk player is also improved.

[VI] *Arrangement of TOC data*:

The TOC (Table Of Contents) data recorded in the lead-in area of the video disk 7A will be described below. The TOC data represent the arrangement, length, etc. of the information recorded on the video disk 7A.

As shown in FIG. 17, the TOC data is recorded in blocks. Each TOC data block TBLK is assigned to one video frame, and has a data structure complete in one video frame. The TOC data is recorded in blocks because it can be managed in blocks and hence can be stored in blocks into a RAM of a microcomputer in the video disk player. The same TOC data block TBLK is recorded repeatedly over 30 frames (blocks) or more. Therefore, in the event that recorded TOC data cannot be reproduced due to a dropout during playback operation, the optical pickup 9 may be jumped back one frame at a time to read the TOC data again.

The TOC data block TBLK is recorded in at least 30 blocks (30 video frames) from the last video frame in the lead-in area. The TOC data block TBLK is recorded in 30 blocks or more because the 30 or more blocks can provide a sufficient range from which TOC data can be read again in the event of a reproduced RF signal dropout owing to a track jump of the optical pickup 9 during the playback operation.

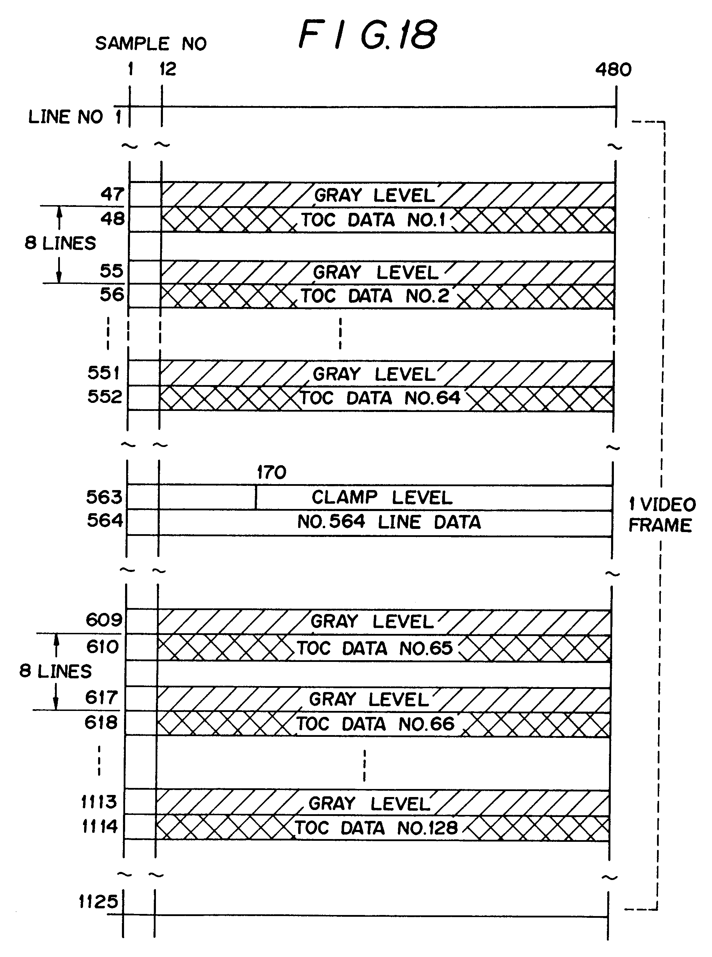

As shown in FIG. 18, each TOC data block TBLK is placed in a video signal (C and Y video signals) transmission region of the MUSE signal transmission format. That is, in the lead-in area, since no video signal is necessary, a video signal region which is of black level is utilized to record the TOC data blocks TBLK. One video frame includes video signal regions for respective video field. One of the video signal regions is composed of 511 lines in the video field including lines Nos. 47 through 558, and the other video signal region is composed of 511 lines in the video field including lines Nos. 609 through 1120. The video signal period of these 511 lines in each video field contains C and Y video signal transmission regions. However, since these C and Y video signal transmission regions are not necessary, all sample Nos. 13 through 480 in these 511 lines are used as a TOC data region.

In the present embodiment, TOC data Nos. 1 through 64 are placed at equal 8-line intervals from a line No. 48 through a line No. 552, and TOC data Nos. 65 through 128 are placed at equal 8-line intervals from a line No. 610 through a line No. 1114, there being a total of 128 lines of TOC data. Thus, the TOC data are provided in the line Nos. 48 + 8n (n is a line No.) and line Nos. 610 + 8n (n is a line No.), and are arranged so as not to overlap frame pulses FP in line Nos. 1 and 2 and control signals in line Nos. 559 through 563 and 1121 through 1125. As a consequence, the TOC data will not interfere with operation of the MUSE decoder when the video disk 7A is played back.

The TOC data is recorded at first in the line No. 48 because "gray level data" for setting a signal level is placed in a line immediately prior to each TOC data. The Y video signal region that can be used starts at the line No. 47, and gray level data is placed in the line No. 47, which is followed by the line No. 48 with the TOC data recorded therein. Similarly, gray level data is placed in the line No. 609, which is followed by the line No. 610 with the TOC data recorded therein. The "gray level data" will be described later on.

The TOC data is recorded at equal 8-line intervals because of the processing speed of the microcomputer in the video disk player for processing the data read from the video disk. More specifically, since the TOC data is recorded at 8-line intervals and the period of one line is 29.6296 μsec, the TOC data is reproduced at every interval of:

$$29.6296 \ \mu sec \times 8 \ = \ 237.03 \ \mu sec.$$

The data to be read within the above interval is of 64 bits, i.e., 8 bytes, among all 76 bits of the disk code DSCD, because SYNC is removed, and hence can sufficiently be read at the processing speed of a general microcomputer.

[VII] *Data format for TOC data*:

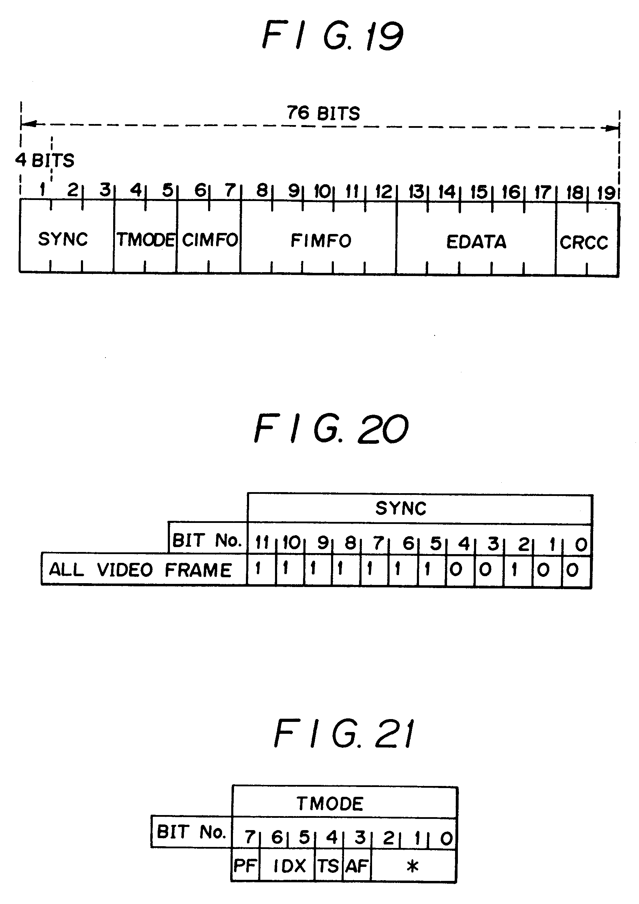

FIG. 19 shows a data format for the TOC data. As shown in FIG. 19, the TOC data is of the same format as that for the disk code DSCD inserted in the empty line FL, i.e., the horizontal scanning line No. 564, as described above. Since the TOC data and the disk code DSCD are of the same common format, the disk code reader 19 (see FIG. 2) in the video disk player can be used to read both the TOC data and the disk code DSCD. Therefore, the video disk player may be simplified in arrangement.

As shown in FIG. 19, the TOC data includes, successively in order from the sample No. 13 to the sample No. 480, (1) a header SYNC, (2) a TOC-contained information identification code MODE, (3) a chapter information code CIMFO, (4) a frame information code FIMFO, (5) an extended data code EDATA, and (6) an error correcting code CRCC. These codes will be described in detail below.

(1) Header SYNC (FIG. 20):

The header SYNC is of the same format as that for the disk code DSCD (FIG. 10).

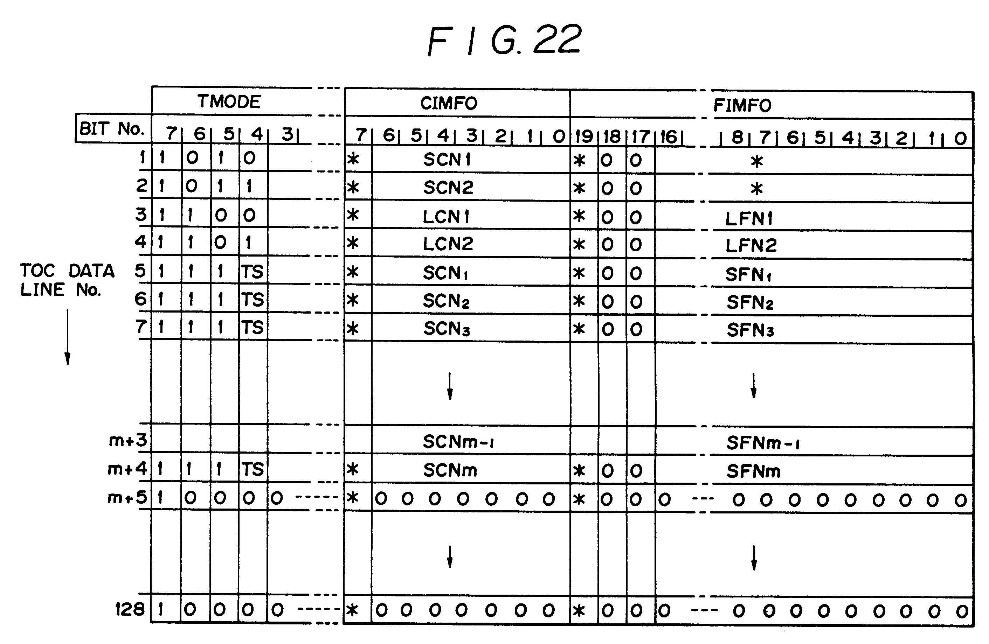

(2) TOC-contained information identification code MODE (FIG. 21):

The TOC-contained information identification code MODE, which may be referred to as a TOC code for the TOC data, is a code representative of information relative to the information in the TOC. The names and meanings of bits in the TOC-contained information identification code MODE will be set forth below.

PF: Multiplexing period identification bit:
This bit has the same definition as that of PF in the data added to the line No. 564. PF = "1" in the TOC data line.

IDX: TOC identification code:
This is a code for identifying the contents of CIMFO (chapter number information in each TOC data line) and FIMFO (frame number information in each TOC data line).
when IDX = "00", the contents of CIMFO, FIMFO are invalid. Otherwise, refer to the following definition.

TS: Disk side identification bit:
TS = "0" if the contents of CIMFO, FIMFO indicate a side 1, and TS = "1" if the contents of CIMFO, FIMFO indicate a side 2.
Within the TOC data, the disk side identification bit TS may be used for the data contents of CIMFO, FIMFO to indicate either only the information on the same side as a recorded disk side or the information including information on the reverse side.

AF: EDATA validity identification bit:
AF = "0" if the EDATA (extended data) code in each TOC data line is invalid, and AF = "1" if the EDATA code is valid.

* : Undefined.

(3) Chapter information code CIMFO, and

(4) Frame information code FIMFO (FIG. 22):

These codes are codes for indicating information relative to chapters and corresponding video frames in the program area of the video disk 7A. The contents of these codes are given below:

SCN1:  Program start chapter number on side 1:
       It is of a binary format with an MSB at first.
       It is recorded at TOC data line No. 1.
SCN2:  Program start chapter number on side 2:
       It is of a binary format with an MSB at first.
       It is recorded at TOC data line No. 2.
LCN1:  Program last chapter number on side 1:
       It is of a binary format with an MSB at first.
       It is recorded at TOC data line No. 3.
LCN2:  Program last chapter number on side 2:
       It is of a binary format with an MSB at first.
       It is recorded at TOC data line No. 4.
LFN1:  Universal frame number of the last video frame on side 1:
       It is of a binary format with an MSB at first.
       It is recorded at TOC data line No. 3.
LFN2:  Universal frame number of the last video frame on side 2:
       It is of a binary format with an MSB at first.
       It is recorded at TOC data line No. 4.
SCNn:  Chapter number on the disk side indicated by TS:
       It is of a binary format with an MSB at first.
       n ranges from 1 through m (m is 124 or less).
SFNn:  Start universal frame number of the chapter indicated by SCNn:
       It is of a binary format with an MSB at first.
       n ranges from 1 through m (m is 124 or less).
* :    Undefined.

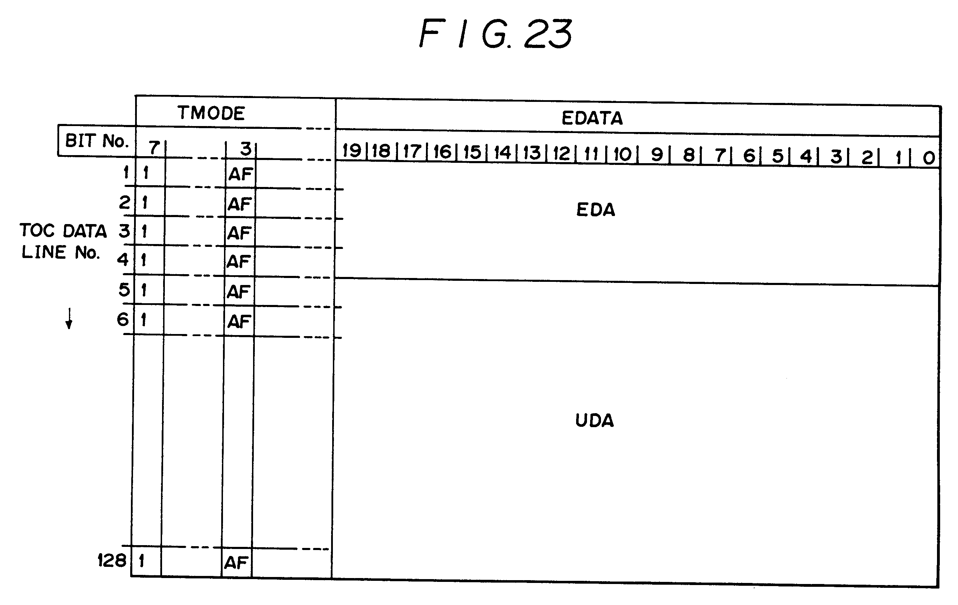

(5) Extended data code EDATA (FIG. 23):

This code serves to indicate additional information other than the information about the information recorded on the video disk 7A, and also indicate a region for the user. The contents of the extended data code EDATA are as follows:

EDA: Extended data region:
Manufacturer identification, catalog number code.
Recorded in TOC data line Nos. 1 through 4.
EDA is invalid if AF = "0", and valid if AF = "1".

UDA: User data region:
Undefined.
Recorded in TOC data line Nos. 5 through 128.
UDA is invalid if AF = "0", and valid if AF = "1".

[VIII] *Gray level*:

As shown in FIG. 18, gray level data GLV are provided in lines immediately prior to the respective TOC data. Therefore, each of the gray level data GLV is paired with one line of TOC data at all times.

The gray level is defined in as the same manner as the clamp level, and has a signal level of "128/256" on the 8-bit quantization scale. The 8-bit quantization scale is the same as that for the disk code DSCD, and has 256 levels at equal intervals with the minimum level of "0" and the maximum level of "255". The gray level may be slightly different from the level of "128/256" insofar as it is of a level (intermediate level) substantially equal to a slice level used when the TOC data is read.

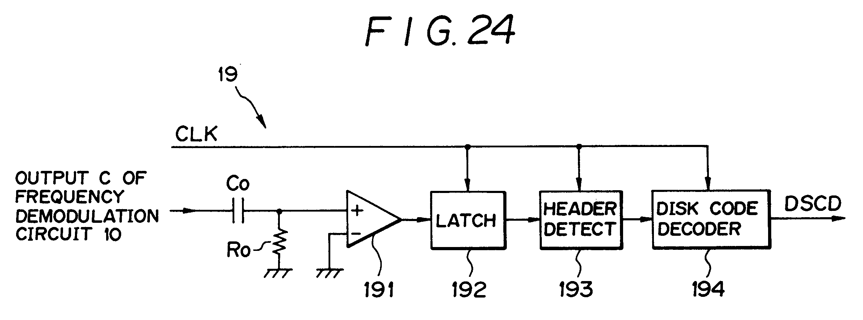

Operation of the gray level data GLV will be described below. FIG. 24 shows, by way of example, a circuit arrangement for the disk code reader 19 (see FIG. 2). As shown in FIG. 24, the demodulated MUSE signal c from the frequency demodulator 10 (see FIG. 2) is supplied through a coupling capacitor Co to a positive input terminal of a comparator 191. The positive input terminal of the comparator 191 is connected to a bias resistor Ro which is grounded, and the comparator 191 has a grounded negative input terminal.

The comparator 191 applies its output signal to a latch 192 which may be a D-type flip-flop. The latch 192 has a clock input terminal supplied with a reference clock signal CLK. In response to a pulse of the reference clock signal CLK, the latch 192 stores the output signal from the comparator 191 until a next pulse of the reference clock signal CLK is supplied to the latch 192. The latch 192 supplies the stored signal to a header detector 193.

The header detector 193 may includes a digital comparator, for example, for comparing the pattern of the supplied signal with a reference code whose pattern is the same as the 8-bit pattern of the header SYNC, i.e., the synchronizing pattern code, of the disk code DSCD or the TOC data, thereby detecting the header SYNC of the disk code DSCD or the TOC data of the supplied signal. The header detector 193 supplies a detected header signal to a disk code decoder 194. In response to the detected header signal, the disk code decoder 194 successively writes output signals from the latch 192 into a memory. The disk code decoder 194 determines whether biphase-modulated data of a predetermined number of bits has been supplied or not. If biphase-modulated data of a predetermined number of bits has been supplied, the disk code decoder 194 produces data indicative of a disk code DSCD.

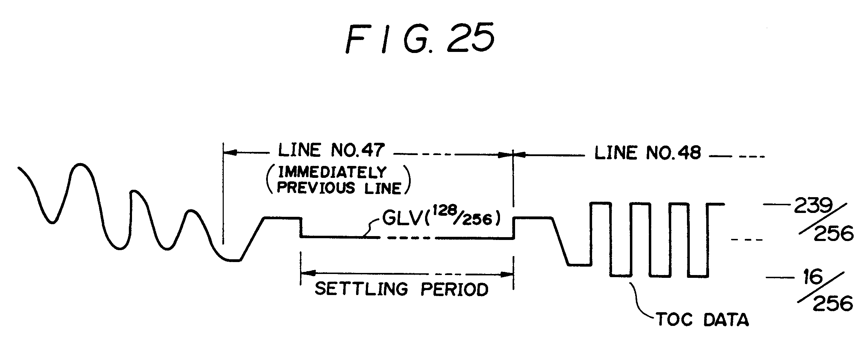

The disk code DSCD or TOC data signal in the MUSE signal which is applied to the comparator 191 has been biphase-modulated to avoid the influence of DC components, and hence is free of DC components. Therefore, the code signal, from which DC components have been removed by the coupling capacitor Co, varies in its amplitude across the zero level. The comparator 191, which includes a zero-crossing comparator, detects positive- and negative-going edges of the code signal with a slice level of "0". The gray level data GLV is of an intermediate signal level of 128/256 which is substantially the same as the slice level used by the comparator 191. Since the gray level data GLV is provided immediately prior to each of the TOC data, therefore, the gray level data GLV is applied to the comparator 191 immediately before the associated TOC data is applied. Irrespective of what condition the signal prior to the gray level data GLV is in, the intermediate level of the MUSE signal c can automatically be set to the slice level immediately before the associated TOC data is applied, provided the capacitance of the coupling capacitor Co and the resistance of the resistor Ro are of appropriate values, as shown in FIG. 25. With the setting period being thus provided by the gray level data GLV immediately prior to the associated TOC data, the disk code reader 19 can detect edges from the first bit of the TOC data, and hence can properly decode the TOC data. By thus providing the gray level data GLV immediately prior to each of the TOC data, the disk code reader 19 requires no special clamper to maintain a desired signal level, but may be connected to the output terminal of the frequency demodulator 10 simply through the coupling capacitor Co, as shown in FIG. 24. Accordingly, the disk code reader 19 may be of a relatively simple circuit arrangement.

Although a certain preferred embodiment of the present invention has been shown and described in detail, it should be understood that various changes and modifications may be made therein without departing from the scope of the appended claims.

## Claims

1. A method of recording, on a video disk (7), information including a code signal (DSCD) for controlling the playback of the video disk, comprising the step of:

adding a code signal (DSCD) to each video frame of a video signal in a predetermined period thereof; and

recording the video signal, which includes the added code signal, on a video disk;

said code signal including a video frame number code (UFN) representative of successive values from a lead-in area through a program area to a lead-out area of the video disk.

2. A method according to claim 1, wherein said code signal further includes identification information (ADST) for identifying each of said lead-in, program, and lead-out areas to which said video frame number code belongs.

3. A method according to claim 1, wherein said video signal comprises a MUSE signal.

4. A method according to claim 2, wherein said video signal comprises a MUSE signal.

5. A method according to claim 1, wherein said predetermined period comprises an undefined horizontal scanning line period.

6. A method according to claim 2, wherein said predetermined period comprises an undefined horizontal scanning line period.

F I G. 1

FIG. 2

EP 0 532 277 A2

# F I G. 3

G : GUARD  AREA

| SAMPLE NO. LINE NO. | 1  12 | 13      106 | 107      480 |
|---|---|---|---|
| 1 | HD PERIOD | | VITS # 1     FRAME PULSE # 1 |
| 2 | | | VITS # 2     FRAME PULSE # 2 |
| 3 | | | SPEECH/ADDITIONAL INFORMATION (40+4 LINES) |
| 43 | | C VIDEO | |
| 47 | | G | Y VIDEO (516 LINES) |
| 559 | | CONTROL SIGNAL | |
| 563 | | | CLAMP LEVEL    128/256 |
| 564 | | FREE | FL |
| 555 | | | SPEECH/ADDITIONAL INFORMATION (40+4 LINE) |
| 605 | | C VIDEO | |
| 609 | | G | Y VIDEO (516 LINES) |
| 1121 | | CONTROL SIGNAL | |
| 1125 | | | CLAMP LEVEL    128/256 |

1 FRAME

← VIDEO SIGNAL PERIOD →

← 1 LINE PERIOD →

15

# F I G. 4

i TH LINE ——→|←—— (i+1)TH LINE —→

HORIZONTAL
SYNCHRONIZING
PERIOD

VIDEO
SIGNAL
PERIOD

# F I G. 5

LEVEL

— 192

— 128

No.1 &
No.2n LINES
(WHERE
 n ≧ 2)

$\left(\begin{matrix}C\\SIGNAL\end{matrix}\right)$ — 64

$\left(\begin{matrix}Y\\SIGNAL\end{matrix}\right)$ 1  2  3  4  5  6  7  8  9 10 11 (SAMPLE No.)

— 192

— 128

No.2 &
No.2n+1 LINES
(WHERE
 n ≧ 1)

— 64

HORIZONTAL REFERENCE
PHASE POINT

# F I G. 6

|←— 140 SAMPLES —→|

HD PERIOD
12
SAMPLES

16 SAMPLES

4 SAMPLES

8 SAMPLES

4 SAMPLES

# F I G. 7

# F I G. 8

MUSE TRANSMISSION
SAMPLING POINTS

MUSE TRANSMISSION
SAMPLING POINTS

# F I G. 9

76 BITS

4 BITS

| 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|----|----|----|----|----|----|----|----|----|----|
| SYNC | | | MODE | | CADR | | FADR1 | | | | | FADR2 | | | | | CRCC | |

# F I G. 10

| | | SYNC | | | | | | | | | | | |
|---|---|---|---|---|---|---|---|---|---|---|---|---|---|
| | BIT No. | 11 | 10 | 9 | 8 | 7 | 6 | 5 | 4 | 3 | 2 | 1 | 0 |
| ALL VIDEO FRAMES | | 1 | 1 | 1 | 1 | 1 | 1 | 1 | 0 | 0 | 1 | 0 | 0 |

# F I G.11

| | MODE | | | | | | | |
|---|---|---|---|---|---|---|---|---|
| BIT No. | 7 | 6 | 5 | 4 | 3 \| 2 | | 1 \| 0 | |
| LEAD-IN VIDEO FRAME | PF | SZ | DF | SD | FVN | | TVN | |
| PROGRAM VIDEO FRAME | PF | SZ | DF | SD | FVN | | TA | * |
| LEAD-OUT VIDEO FRAME | PF | SZ | DF | SD | FVN | | * | |

# F I G.12

| | CADR | |
|---|---|---|
| BIT No. | 7 | 6 \| 5 \| 4 \| 3 \| 2 \| 1 \| 0 |
| LEAD-IN VIDEO FRAME | CF | TCN |
| PROGRAM VIDEO FRAME | CF | CHN |
| LEAD-OUT VIDEO FRAME | CF | * |

# F I G. 13

EP 0 532 277 A2

| | FADR1 | | | | | | | | | | | | | | | | | | | |
|---|---|---|---|---|---|---|---|---|---|---|---|---|---|---|---|---|---|---|---|---|
| BIT No. | 19 | 18 | 17 | 16 | 15 | 14 | 13 | 12 | 11 | 10 | 9 | 8 | 7 | 6 | 5 | 4 | 3 | 2 | 1 | 0 |
| LEAD-IN VIDEO FRAME | * | O | O | UFN | | | | | | | | | | | | | | | | |
| PROGRAM VIDEO FRAME | * | O | 1 | UFN | | | | | | | | | | | | | | | | |
| LEAD-OUT VIDEO FRAME | * | 1 | 1 | UFN | | | | | | | | | | | | | | | | |

ADST

# F I G. 14

| | ADST | UFN | |
| | 18 17 | 16 15 - - - -                    - - - 2 1 0 | |
| LEAD-IN AREA | 0 0 | 1 1 1 1 1 1 1 0 0 0 0 1 0 0 0 0 1 | ( 1FC21 ) |
| | ' | ' | |
| | ' | ' | |
| | ' | ' | |
| | ' | ' | |
| | 0 0 | 1 1 1 1 1 1 1 1 1 1 1 1 1 1 1 1 1 | |
| PROGRAM AREA | 0 1 | 0 0 0 0 0 0 0 0 0 0 0 0 0 0 0 0 0 | |
| | ' | ' | |
| | ' | ' | |
| | ' | ' | |
| | ' | ' | |
| | 0 1 | 1 1 0 1 0 0 1 0 1 1 1 0 1 1 1 1 1 | ( 1A5DF ) |
| LEAD-OUT AREA | 1 1 | 1 1 0 1 0 0 1 0 1 1 1 1 0 0 0 0 0 | |
| | 1 1 | 1 1 0 1 0 0 1 0 1 1 1 1 0 0 0 0 1 | |
| | ' | ' | |
| | ' | ' | |
| | ' | ' | |

## F I G. 15

| | BIT No. | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|
| | | | | | | | | | | FADR2 | | | | | | | | | | | |
| LEAD-IN VIDEO FRAME | | * | * | | | | | | | LFN | | | | | | | | | | | |
| PROGRAM VIDEO FRAME | | ST | SPC | | | | | | | CFN | | | | | | | | | | | |
| LEAD-OUT VIDEO FRAME | | * | * | | | | | | | CFN | | | | | | | | | | | |

## F I G. 16

| BIT No. | SPC | | STILL PICTURE USE FIELD | |
|---|---|---|---|---|
| | 16 | 17 | LEADING FIELD | NUMBER |
| | O | O | 1ST FIELD | 4 FIELDS |
| | O | 1 | 2ND FIELDS | 4 FIELDS |
| | 1 | O | 1ST FIELD | 2 FIELDS |
| | 1 | 1 | 2ND FIELDS | 2 FIELDS |

F I G. 17

SAMPLE NO.

480

30 BLOCKS OR MORE

1 VIDEO FRAME

TOC BLOCK

TOC BLOCK

TOC BLOCK

PROGRAM START VIDEO FRAME

LINE NO.

LEAD-IN AREA

# F I G.18

SAMPLE NO

1  12                                                                                      480

LINE NO 1

| 47 | GRAY LEVEL |
| 48 | TOC DATA NO.1 |

8 LINES

| 55 | GRAY LEVEL |
| 56 | TOC DATA NO.2 |

| 551 | GRAY LEVEL |
| 552 | TOC DATA NO.64 |

170

| 563 | CLAMP LEVEL |
| 564 | NO.564 LINE DATA |

1 VIDEO FRAME

| 609 | GRAY LEVEL |
| 610 | TOC DATA NO.65 |

8 LINES

| 617 | GRAY LEVEL |
| 618 | TOC DATA NO.66 |

| 1113 | GRAY LEVEL |
| 1114 | TOC DATA NO.128 |

1125

# F I G. 19

| | 76 BITS | |
|---|---|---|
| 4 BITS | | |

| 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|
| SYNC | | | TMODE | | CIMFO | | FIMFO | | | | | EDATA | | | | | CRCC | |

# F I G. 20

|  |  | SYNC | | | | | | | | | | | |
|---|---|---|---|---|---|---|---|---|---|---|---|---|---|
| | BIT No. | 11 | 10 | 9 | 8 | 7 | 6 | 5 | 4 | 3 | 2 | 1 | 0 |
| ALL VIDEO FRAME | | 1 | 1 | 1 | 1 | 1 | 1 | 1 | 0 | 0 | 1 | 0 | 0 |

# F I G. 21

|  | TMODE | | | | | | | |
|---|---|---|---|---|---|---|---|---|
| BIT No. | 7 | 6 | 5 | 4 | 3 | 2 | 1 | 0 |
| | PF | IDX | | TS | AF | * | | |

25

# F I G. 22

| TOC DATA LINE No. | TMODE | | | | | | CIMFO | | | | | FIMFO | |
|---|---|---|---|---|---|---|---|---|---|---|---|---|---|
| BIT No. | 7 | 6 | 5 | 4 | 3 | | 7 | 6 5 4 3 2 1 0 | 19 | 18 | 17 16 | 8 7 6 5 4 3 2 1 0 | |
| 1 | 1 | 0 | 1 | 0 | | | * | SCN1 | * | 0 | 0 | * | |
| 2 | 1 | 0 | 1 | 1 | | | * | SCN2 | * | 0 | 0 | * | |
| 3 | 1 | 1 | 0 | 0 | | | * | LCN1 | * | 0 | 0 | LFN1 | |
| 4 | 1 | 1 | 0 | 1 | | | * | LCN2 | * | 0 | 0 | LFN2 | |
| 5 | 1 | 1 | 1 | TS | | | * | $SCN_1$ | * | 0 | 0 | $SFN_1$ | |
| 6 | 1 | 1 | 1 | TS | | | * | $SCN_2$ | * | 0 | 0 | $SFN_2$ | |
| 7 | 1 | 1 | 1 | TS | | | * | $SCN_3$ | * | 0 | 0 | $SFN_3$ | |
| ↓ | | | | | | | | ↓ | | | | ↓ | |
| m+3 | | | | | | | | $SCN_{m-1}$ | | | | $SFN_{m-1}$ | |
| m+4 | 1 | 1 | 1 | TS | | | * | $SCN_m$ | * | 0 | 0 | $SFN_m$ | |
| m+5 | 1 | 0 | 0 | 0 | 0 | | * | 0 0 0 0 0 0 0 | * | 0 | 0 0 | 0 0 0 0 0 0 0 0 0 | |
| ↓ | | | | | | | | ↓ | | | | ↓ | |
| 128 | 1 | 0 | 0 | 0 | 0 | | * | 0 0 0 0 0 0 0 | * | 0 | 0 0 | 0 0 0 0 0 0 0 0 0 | |

# F I G. 23

| BIT No. | TMODE | | | EDATA | | | | | | | | | | | | | | | | | | | | |
|---|---|---|---|---|---|---|---|---|---|---|---|---|---|---|---|---|---|---|---|---|---|---|---|---|
| | 7 | | 3 | 19 | 18 | 17 | 16 | 15 | 14 | 13 | 12 | 11 | 10 | 9 | 8 | 7 | 6 | 5 | 4 | 3 | 2 | 1 | 0 |
| 1 | 1 | | AF | | | | | | | | | | | | | | | | | | | | |
| 2 | 1 | | AF | | | | | | | | EDA | | | | | | | | | | | | |
| 3 | 1 | | AF | | | | | | | | | | | | | | | | | | | | |
| 4 | 1 | | AF | | | | | | | | | | | | | | | | | | | | |
| 5 | 1 | | AF | | | | | | | | | | | | | | | | | | | | |
| 6 | 1 | | AF | | | | | | | | | | | | | | | | | | | | |
| | | | | | | | | | | | | | | | | | | | | | | | |
| | | | | | | | | | | | UDA | | | | | | | | | | | | |
| 128 | 1 | | AF | | | | | | | | | | | | | | | | | | | | |

TOC DATA
LINE No.

27

F I G. 24

# F I G. 25

LINE NO.47
(IMMEDIATELY PREVIOUS LINE)

LINE NO.48

GLV($^{128}/_{256}$)

SETTLING PERIOD

TOC DATA

$^{239}/_{256}$

$^{16}/_{256}$

EP 0 532 277 A2